(19) **Europäisches Patentamt**

**European Patent Office**

**Office européen des brevets**

(11) **EP 1 283 611 A2**

(12) **EUROPÄISCHE PATENTANMELDUNG**

(43) Veröffentlichungstag:
**12.02.2003 Patentblatt 2003/07**

(51) Int Cl.⁷: **H04J 3/06**, H04M 7/00, H04L 12/26

(21) Anmeldenummer: **02100788.5**

(22) Anmeldetag: **09.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **09.08.2001 DE 10139143**

(71) Anmelder: **SIEMENS AKTIENGESELLSCHAFT**
**80333 München (DE)**

(72) Erfinder: **Zwack, Eduard**
**82178, Puchheim (DE)**

(54) **Verfahren zur Synchronisierung eines Kommunikationssystems über ein paketorientiertes Datennetz**

(57) Zur Synchronisierung eines Kommunikationssystems über ein paketorientiertes Datennetz (4) wird durch eine Meßeinrichtung (11) eine Frequenzversetzung einer Zeitmeßeinrichtung (13) ermittelt, wobei hierzu nur Datenpakete mit einer näherungsweise gleichen Hin- und Rücklaufzeit herangezogen werden.

FIG 6

EP 1 283 611 A2

**Beschreibung**

Die Erfindung betrifft ein Verfahren zur Synchronisierung eines Kommunikationssystems über ein paketorientiertes Datennetz mittels einer Meßeinrichtung zum Ermitteln einer Frequenzversetzung gemäß dem Oberbegriff des Patentanspruches 1 sowie eine Sende- und Empfangseinrichtung und eine Netzwerkeinrichtung.

Sprachverbindungen in Telekommunikationsnetzen werden bisher überwiegend verbindungsorientiert aufgebaut. Hierzu ist für eine Signalübertragung zwischen zwei Kommunikationsendpunkten eine Leitung vorgesehen, die für die gesamte Zeit der Sprachverbindung reserviert ist. Diese Art der Telekommunikationsverbindung wird auch als leitungsvermittelnde Telekommunikation (circuit switching) bezeichnet.

Mit dem Aufkommen paketorientierter Datennetze, wie beispielsweise des Internet, ist eine im Vergleich zur leitungsvermittelnden Telekommunikation relativ preisgünstige Kommunikation möglich. Dies liegt insbesondere an der besseren Ausnutzbarkeit einer Verbindung, da die in einem Telekommunikationsnetz vorhandenen Ressourcen, insbesondere Übertragungskapazitäten, mittels einer paketorientierten Übertragung (packet switching) weitaus effizienter genutzt werden können, als dies bei einer leitungsorientierten Übertragung möglich ist.

Als paketorientierte Übertragungsverfahren für Sprache sind beispielsweise VoFR (Voice over Frame Relay) oder VoIP (Voice over IP) bekannt. Hierbei werden Sprachdaten digitalisiert, einer Quellenkodierung und vorzugsweise einer Kanalkodierung unterzogen und auf Datenpakete aufgeteilt, die dann über das Internet übermittelt werden. Insbesondere VoIP wird eine wesentliche Bedeutung für die zukünftige Sprachkommunikation vorausgesagt.

Bei der Übertragung von Sprachdaten mittels paketorientierter Übertragungsverfahren tritt jedoch das Problem auf, daß eine Laufzeit der die Sprachdaten transportierenden Datenpakete wesentlich höher sein kann als bei der klassischen Telefonie und daß die Laufzeiten benachbarter Datenpakete stark variieren, so daß sie in der Empfängereinrichtung nicht mehr in nahezu Echtzeit zusammengesetzt werden können.

Üblicherweise führt dies zu Verzögerungen (Jitter) oder gar Aussetzern in der Sprachverbindung, im schlimmsten Fall kann die Sprachverbindung sogar komplett abbrechen. Im öffentlichen Telefonnetz liegen die Verzögerungszeiten bei 20-30 ms, während sie in VoIP-Netzen über 500 ms erreichen können. Für diese Laufzeitunterschiede sind u.a. die Sprachkomprimierung und die Wartezeit bei der Paketierung verantwortlich. Eine weitere wesentliche Ursache dieser Laufzeitunterschiede ist jedoch in Synchronisierungsfehlern zu finden.

Eine wesentliche Voraussetzung zur Reduzierung dieser Laufzeitunterschiede liegt daher in der exakten Synchronisierung des Kommunikationssystems innerhalb des Datennetzes. Dazu müssen die Systemzeiten der an der Kommunikation beteiligten Endpunkte exakt übereinstimmen. Zur Synchronisation der Systemzeiten wird dabei auf ein NTP (Network Time Protocol) zurückgegriffen. Das NTP-Protokoll wird durch synchronisierte Time-Server, die sich an verschiedenen Punkten im Internet befinden, realisiert. Spezifiziert wurde dieses Protokoll in RFC 1305.

Die resultierende gemeinsame Zeitbasis wird für zeitkritische Prozesse, insbesondere bei der Internet-Telefonie, benutzt. Die Time-Server stehen in hierarchischer Beziehung zueinander. Ein sekundärer Time-Server erhält seine Zeit über das Datennetz von einem primären Time-Server, andere Time-Server beziehen ihre Zeit wiederum von dem sekundären Server. Die Zeitsynchronisation zwischen einer Sende- und Empfangseinrichtung und einem Time-Server läuft vereinfacht gesehen folgendermaßen ab:

Die Sende- und Empfangseinrichtung sendet zu einem Zeitpunkt T1 ein NTP-Datenpaket mit einer NTP-Kennzeichnung an den Time Server, bei dem dieses Datenpaket zum Zeitpunkt T2 eintrifft. Der Server wertet die eintreffende Kennzeichnung innerhalb des Datenpaketes aus, tauscht die IP-Adresse aus und sendet das Datenpaket zu einem Zeitpunkt T3 wieder an die Einrichtung zurück, wo das Datenpaket schließlich zum Zeitpunkt T4 eintrifft. Aus diesem Verfahren resultieren also vier Zeitpunkte (Zeitstempel), aus denen eine Rechnereinrichtung innerhalb der Sende- und Empfangseinrichtung eine Verzögerung, also die Zeit die das Datenpaket mit der NTP-Kennzeichnung im Netz unterwegs war, errechnet. Zudem wird ein Offset, also die Zeitspanne worin die Uhren der Sende- und Empfangseinrichtung und des Time Servers differieren, bestimmt. Beide Größen werden näherungsweise bestimmt aus:

$$\text{Verzögerung} = (T4-T1) - (T3-T2)$$

$$\text{Offset} = \frac{(T4-T3) + (T1-T2)}{2}$$

Anhand der Formel zur Bestimmung des Offsets wird erkenntlich, daß der Offset nur eine Mittelung der Verzögerung beinhaltet, d.h. bei diesem Verfahren wird davon ausgegangen, daß Hin- und Rückweg der NTP-Datenpakete gleich lang sind. Abweichungen davon gehen als Fehler in die Berechnung des Offsets ein. Somit können nur Phasengenauigkeiten von maximal 1 ms erreicht werden.

Eine gute Synchronisation ist auch für ein reibungsloses Zusammenwirken von IP-Systemen mit "klassischen" TDM-Systemen unabdingbar.

Der Erfindung liegt daher die Aufgabe zugrunde, ein Verfahren zur exakten Synchronisierung der Sende- und Empfangseinrichtungen in einem Datennetz, so daß die Laufzeiten und insbesondere die Laufzeitunterschiede zeitlich zusammenhängender Datenpakete derart reduziert werden, daß eine Sprachverbindung mit hoher Qualität gewährleistet wird, sowie hierzu geeignete Vorrichtungen bzw. Komponenten anzugeben.

Diese Aufgabe wird durch ein Verfahren mit den Merkmalen von Anspruch 1 sowie durch eine Sende- und Empfangseinrichtung nach Anspruch 7 und durch eine Netzwerkeinrichtung nach Anspruch 8 gelöst. Bevorzugte Ausgestaltungen der Erfindung ergeben sich aus den abhängigen Ansprüchen.

Ein wesentlicher Punkt der Erfindung liegt darin, daß zur Ermittlung eines Frequenzversatzes von mindestens zwei eine näherungsweise gleiche Verzögerung aufweisenden Datenpaketen nur Datenpakete herangezogen werden, die eine näherungsweise gleiche Hin- und Rücklaufzeit aufweisen. Dadurch läßt sich eine Frequenzversetzung sehr genau bestimmen, ohne daß durch inadäquate Mittelungen Meßfehler auftreten.

In einer weiteren Ausführung werden zur Ermittlung des Frequenzversatzes nur Datenpakete mit einer kurzen Laufzeit herangezogen. Aus derzeitiger Sicht sollte diese Laufzeit kleiner als 5 ms sein. In einer bevorzugten Ausführung werden die Datenpakete mittels entsprechender Sendeeinrichtungen über Netzwerkknoten mit integrierten Referenztaktgebern, insbesondere NBCS-Refe-renztaktgeber, transportiert. In dieser Ausführung enthält also jeder Netzknoten, über den die Datenpakete gesendet werden, einen NBCS-Referenztaktgeber. Bedingt durch diese Ausführung reduziert sich eine Verzögerungsvarianz, also die Laufzeit der Datenpakete, ganz erheblich. Durch eine Integration von Netzwerkknoten gemäß dieser Ausführung wird die Laufzeit konstant gehalten.

Zur Ausführung des Verfahrens wird zum Transport der Datenpakete auf ein erweitertes RTP-Protokoll (Real Time Transport Protocol) zurückgegriffen. Somit stehen genügend auswertbare Zeitdaten für eine Synchronisation zur Verfügung. Es werden zusätzlich im Datenpaket ein von einer Empfangsstation empfangener Zeitstempel, ein beim Empfang festgehaltener Zeitstempel und ein beim Senden erzeugter Zeitstempel hinzugefügt.

Die absolute Genauigkeit der Zeitstempel sollte genauer 125 Mikrosekunden sein. Vorzugsweise werden innerhalb der Sendeund Empfangseinrichtung Meßeinrichtungen vorgesehen, die in einer Ausführung des Verfahrens die Frequenzablage einer innerhalb der Einrichtungen angeordneten Zeitmeßeinrichtung bestimmen und eine Kennzeichnung in Abhängigkeit dieser Frequenzablage an eine Nachführeinrichtung senden. Diese Nachführeinrichtung korrigiert dann die Systemzeit der jeweiligen Einrichtung in Abhängigkeit der Frequenzablage.

Weitere vorteilhafte Ausführungsformen ergeben sich aus den Unteransprüchen sowie der nachfolgenden Beschreibung der bevorzugten Ausführungsbeispiele, die anhand der Abbildungen näher erläutert werden. Hierbei zeigen:

Fig. 1 eine schematische Darstellung einer Netzwerkeinrichtung;

Fig. 2 eine schematische Darstellung zur Synchronisierung innerhalb eines Datennetzes;

Fig. 3a eine Darstellung einer Zuordnung von Netzwerkknoten gemäß zweier Ausführungen nach dem Stand der Technik;

Fig. 3b eine Darstellung einer Zuordnung der Netzwerkknoten gemäß einer Ausführungsform der Erfindung;

Fig. 3c ein Diagramm zur Darstellung von Verzögerungsvarianzen in Abhängigkeit der Anordnung der Netzwerkknoten;

Fig. 4 ein Diagramm zur Bestimmung einer Frequenzablage;

Fig. 5 eine Darstellung eines erweiterten RTP-Datenpaketes, und

Fig. 6 eine Anordnung zur Bestimmung und Korrektur einer Frequenzversetzung.

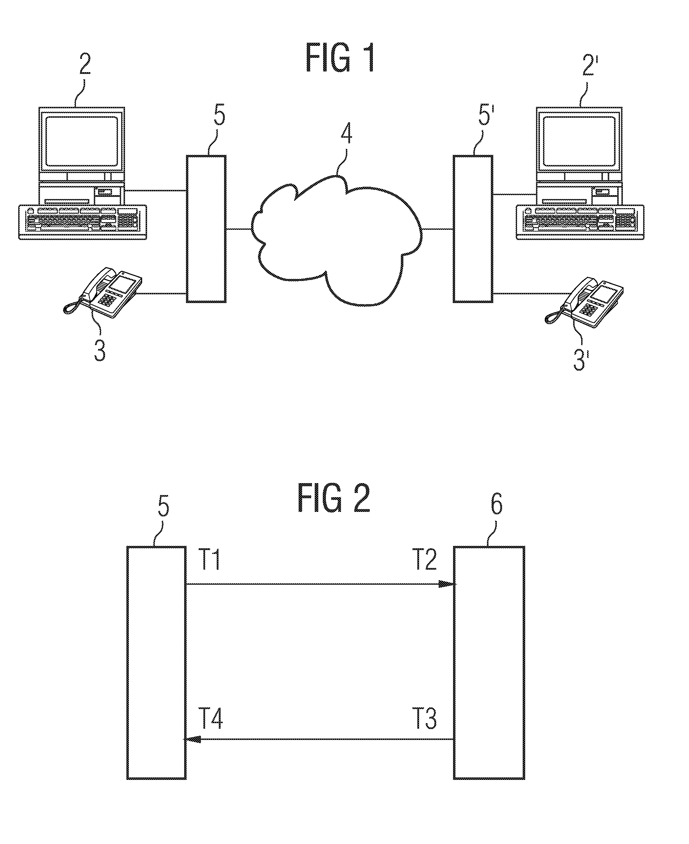

Figur 1 zeigt in einer schematischen Darstellung eine Anordnung einer Netzwerkeinrichtung 1 zur Vernetzung von Datenverarbeitungsgeräten 2, 2' und/ oder Telekommunikationsendgeräten 3, 3' über ein paketorientiertes Datennetz 4, z.B. dem Internet. Die Geräte sind an Sende- und Empfangseinrichtungen 5, 5' angeschlossen, die eine Verbindung mit dem paketorientierten Datennetz 4 herstellen.

Die Übertragung von Sprachdaten über das paketorientierte Datennetz 4 nimmt einen immer größer werdenden Stellenwert in der Telekommunikation ein. Im Gegensatz zur Leitungsvermittlung (circuit-switching) wird bei diesem Kommunikationsverfahren keine dauerhafte Belegung eines Kanals während eines Gespräches vorgenommen, sondern bei der auch als Internet-Telefonie bezeichneten Kommunikation wird die Sprache digitalisiert, komprimiert und auf mehrere Datenpakete verteilt übertragen. Jedes Datenpaket wird dabei mit einem Header versehen, der die gesamten vermittlungsrelevanten Informationen enthält. Zu diesen Informationen zählen insbesondere Adressinformationen von Empfänger und Absender sowie Hinweise zur Versendung an den jeweiligen Empfänger. Innerhalb des paketorientierten Datennetzes 4 findet eine Datenpaketvermittlung (packet-switching) statt, bei der Daten paketweise über Teilstrecken von einem Netzknoten zum nächsten vermittelt werden. Die einzelnen Datenpakete werden dann beim Empfänger wieder zu einem ursprünglichen Datenstrom zusammengefügt.

Zur technischen Realisierung der Sprachkommunikation über das Datennetz 4 bestehen mehrere Möglichkeiten. In einer ersten Ausführung können zwei Gesprächspartner über zwei an das Internet angeschlossene Datenverarbeitungsgeräte 2, 2' miteinander telefonieren. Diese Geräte digitalisieren jeweils die Sprachsignale und reduzieren die Datenmenge mittels einer Sprachkomprimierung. Um eine Verbindung aufzubauen, muß der Anrufer die IP-Adresse seines Gesprächspartners kennen. Viele Internetbenutzer besitzen allerdings keine feste IP-Adresse, da ihr Service-Provider ihnen bei jeder Anmeldung eine IP-Adresse dynamisch zuweist. Ein Telefongespräch auf diese Art zu initiieren, ist also sehr umständlich. Zudem sind nur Personen erreichbar, die gerade "online" sind.

Eine zweite Variante bildet die Kommunikation zwischen Datenverarbeitungsgerät 2 (2') und Telekommunikationsendgerät 3' (3), bei der die Gesprächsdaten an einem Punkt des Datennetzes 4 in das normale Telefonnetz (PSTN) gelangen. Diese Aufgabe wird in dieser Ausführung von einem Gateway 5' (5) übernommen.

Eine dritte und die bequemste Möglichkeit der IP-Telefonie ist die direkte Verbindung von Endgerät 3 zu Endgerät 3'. Hierfür werden zwei Gateways 5, 5' benötigt, die möglichst nahe bei den Endgeräten 3, 3' positioniert sein sollten.

In Figur 2 ist eine Ausführung zur Synchronisierung einer Systemzeit der Sende- und Empfangseinrichtung 5, 5' nach dem Stand der Technik dargestellt.

Das weiter oben bereits erwähnte NTP-Protokoll wird durch synchronisierte Time-Server 6, die sich an verschiedenen Punkten im Internet befinden, realisiert. Spezifiziert wurde dieses Protokoll in RFC 1305. Die resultierende gemeinsame Zeitbasis wird für zeitkritische Prozesse, insbesondere bei der Internet-Telefonie, benutzt. Die Time-Server 6 stehen in hierarchischer Beziehung zueinander. Die Zeitsynchronisation zwischen der Sende- und Empfangseinrichtung 5, 5' und dem Time-Server 6 läuft vereinfacht gesehen folgendermaßen ab:

Die Sende- und Empfangseinrichtung 5 sendet an einem Zeitpunkt T1 ein NTP-Datenpaket mit einer NTP-Kennzeichnung an den Time-Server 6, bei dem dieses Datenpaket zum Zeitpunkt T2 eintrifft. Der Server wertet die eintreffende Kennzeichnung innerhalb des Datenpaketes aus, tauscht die IP-Adresse aus und sendet das Datenpaket an einem Zeitpunkt T3 wieder an die Einrichtung 5 zurück, bei der das Datenpaket schließlich zum Zeitpunkt T4 eintrifft. Aus diesem Verfahren resultieren also vier Zeitpunkte (Zeitstempel), aus denen eine Meßeinrichtung innerhalb der Sende- und Empfangseinrichtung 5, 5' eine Verzögerung, also die Zeit die das Datenpaket mit der NTP-Kennzeichnung im Netz unterwegs war, errechnet.

Zudem wird ein Frequenzversatz (Offset), also eine Zeitspanne, um die die Uhren der Sende- und Empfangseinrichtung 5, 5' und des Time-Servers 6 differieren, bestimmt. Beide Größen werden näherungsweise bestimmt aus:

$$\text{Verzögerung} = (T4-T1) - (T3-T2)$$

$$\text{Offset} = \frac{(T4-T3) + (T1-T2)}{2}$$

In der vorliegenden Ausführung des erfinderischen Verfahrens werden nur diejenigen zwischen der Sende- und Empfangseinrichtung 5, 5' und dem Time-Server 6 übertragen Datenpakete zur Synchronisierung herangezogen, die eine gleiche Hinlaufzeit (T2-T1) und Rücklaufzeit (T4-T3) aufweisen. Vorteilhafte Ausführungsformen zur exakten Bestimmung der Hinlauf- und Rücklaufzeit werden in Ausführungsbeispielen weiter unten näher erläutert.

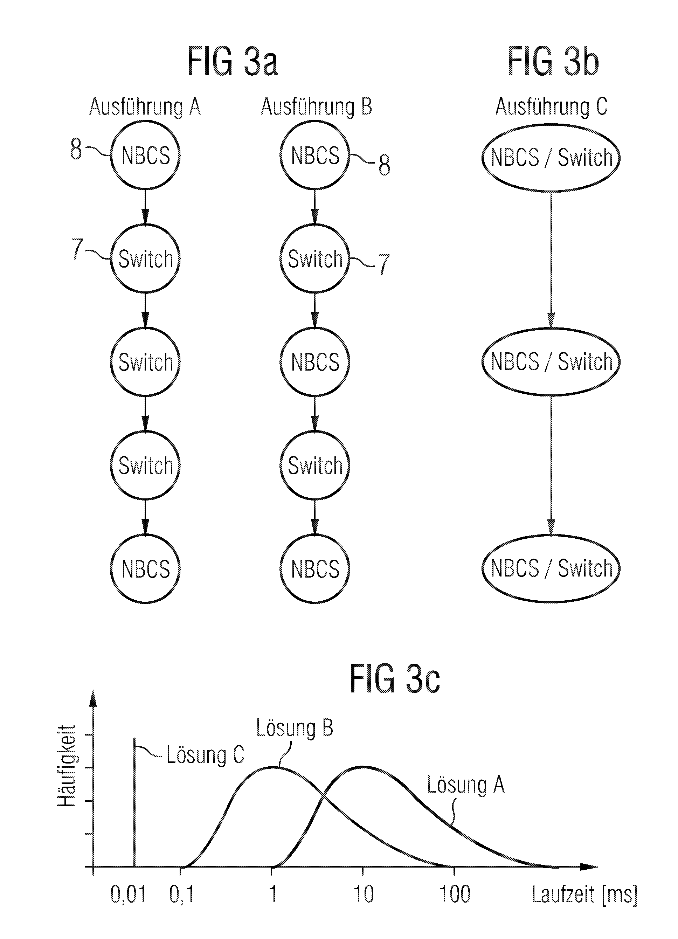

Figur 3a zeigt zwei Anordnungen von Netzwerkknoten 7 und Referenztaktgebern 8 innerhalb des Datennetzes 4 in einer Ausführung nach dem Stand der Technik.

Die Anforderungen an ein Sprachnetz sind vielfältig. Wesentlich ist ein Quasi-Echtzeit-Verhalten bei der Übertragung der die Sprachdaten transportierenden Datenpakete. Sprache ist ein kontinuierlicher Prozeß, dessen Natur es völlig widerspricht, in Pakete aufgeteilt zu werden. Telefonie ist daher der klassische Fall der Echtzeit-Anwendung. Hier müssen die Verzögerungszeiten beim Datentransport minimal sein, da das menschliche Gehör sie sonst wahrnehmen und die Teilnehmer das als nicht zu akzeptierende Fehler auffassen würden. Es muß ebenfalls gewährleistet sein, daß die Pakete in der richtigen Reihenfolge beim Empfänger empfangen werden, da die übertragenden Sprachteile sonst keinen Sinn mehr ergeben. Erst wenn diese beiden Störfaktoren minimiert werden, kann ein Mindestmaß an Sprachqualität gewährleistet werden, ohne daß andere Datenübertragungen massiv beeinträchtigt werden.

Diese Anforderungen können von dem IP-Protokoll allein nicht erfüllt werden, so daß noch zusätzliche Mechanismen geschaffen werden müssen, um die Dienstgüte QoS (Quality of Service) zu gewährleisten. Für die Sprachqualität einer VoIP-Verbindung sind folgende Kriterien bestimmend:

- Laufzeit des Sprachsignals
- Verlust einzelner Sprachabschnitte
- Einsatz von Sprachkomprimierung

Verschiedene Faktoren sind dafür verantwortlich, daß die Laufzeit bei Sprachverbindungen über das IP-Protokoll wesentlich höher sein kann als bei der klassischen Telefonie. Dafür sind u.a. die Sprachkomprimierung und die Wartezeit bei der Paketierung verantwortlich. Weiterhin verzögert die Zwischenspeicherung der Pakete in den Netzwerkknoten 7, insbesondere bei hoher Netzlast, deren Weiterleitung und beeinträchtigt somit die Sprachqualität. Im öffentlichen Telefonnetz liegen die Verzögerungszeiten bei 20-30 ms, während sie in VoIP-Netzen über 500 ms erreichen können. Da das IP-Protokoll verbindungslos arbeitet, nehmen nicht alle Sprachpakete den gleichen Weg durch das Internet. Daher kommt ein "Jitter" zustande, das bedeutet, die Abstände zwischen den Paketen sind nicht mehr gleich groß.

Um diese Wartezeiten zu kompensieren, sind bereits Referenztaktgeber 8 im Datennetz 4 vorgesehen. Im zunehmenden Maße werden in heutigen Datennetz-Architekturen NBCS-(Network Based Communication System) Referenztaktgeber 8 verwendet. Bei der in der Figur 3a dargestellten Ausführung A sind zwischen zwei NBCS-Referenztaktgebern 8 mehrere Netzwerkknoten 7 angeordnet, so daß zur Synchronisierung lange Übertragungswege entstehen.

Bei der in der Figur 3a dargestellten Ausführung B sind zwischen den einzelnen Netzwerkknoten 7 jeweils NBCS-Referenztaktgeber 8 angeordnet. Die Datenpakete werden somit häufiger über die Referenztaktgeber geleitet, so daß während der Synchronisierung die Verzögerungsvarianzen geringer ausfallen. Aufgrund dessen kann eine innerhalb der Netzwerkknoten angeordnete PLL (Phase-Locked-Loop) eine schnellere Regelung vornehmen.

Figur 3b stellt eine Anordnung von Netzwerkknoten 7 gemäß einer Ausführung der Erfindung dar. In dieser Ausführung sind Netzwerkknoten 7 und NBCS-Referenztaktgeber 8 innerhalb einer Einrichtung angeordnet. Diese Einrichtungen werden direkt - ohne daß weitere Netzwerkknoten dazwischen angeordnet werden - miteinander verbunden. Die Laufzeitunterschiede beim Transport von Datenpaketen über ein Datennetz 4 dieser Ausführung fallen somit sehr viel geringer aus. Bei dieser Ausführung wird zudem durch eine Integration von Netzwerkkomponenten die Laufzeitverzögerung konstant gehalten.

In Figur 3c werden in einem Diagramm die Verzögerungsvarianzen bei einer Anordnung der Netzwerkknoten 7 und der NBCS-Referenztaktgeber 8 nach dem Stand der Technik (Fig. 3a) und bei einer Anordnung gemäß der erfinderischen Ausführung (Fig. 3b) dargestellt.

Das in der Figur 3c dargestellte Diagramm zeigt in einer schematischen Ausführung die Häufigkeitsverteilung der Datenpakete in Abhängigkeit der Laufzeit. Es ist zu erkennen, daß die in der Figur 3a dargestellte Anordnung von Netzwerkknoten 7 in der Ausführung A, bei der zwischen zwei NBCS-Referenztaktgebern 8 mehrere Netzwerkknoten 7 zwischengeschaltet sind, zu einer besonders großen Laufzeitverzögerung führt. Es ist weiter zu erkennen, daß Laufzeitverzögerungen entstehen, die einen Betrag von 1 ms nicht unterschreiten. Die höchste Auftrittshäufigkeit an Laufzeitvarianzen ist bei 10 ms anzutreffen. Auch ist die Häufigkeit an Datenpaketen, die 100 ms im Datennetz 4 transportiert werden, noch immer sehr hoch, so daß diese Ausführung zum Transport von Sprachpaketen, selbst bei Verwendung hochwertiger Fehlerkorrekturmechanismen, unbrauchbar erscheint.

Weiter zeigt Figur 3c die Verzögerungsvarianz bei einer Anordnung der Netzwerkknoten 7 und der NBCS-Referenztaktgeber 8 gemäß der Ausführung B (Fig. 2c). Bei dieser Anordnung werden die Datenpakete, im Gegensatz zur ersten Ausführung, sehr viel häufiger über NBCS-Referenztaktgeber 8 geleitet. Dadurch ist die Auftrittshäufigkeit der Datenpakete bei sehr viel geringeren Laufzeiten zu beobachten. Bei dieser Ausführung treten keine Laufzeiten unter 0,1 ms auf, die häufigste Laufzeit beträgt 1 ms und Laufzeiten größer 100 ms werden nicht gemessen.

Schließlich zeigt die Figur 3c mit Kurve C (schematisch) die Laufzeitvarianz von Datenpaketen, die über eine in der Figur 3b dargestellte Anordnung von Netzwerkknoten transportiert werden. Diese Anordnung ist derart aufgebaut, daß die Datenpakete über Netzwerkknoten transportiert werden, die jeweils einen NBCS-Referenztaktgeber enthalten. Bedingt durch diese Ausführung ist die Laufzeit der Datenpakete, wie dem Diagramm der Figur 3c zu entnehmen ist, sehr viel geringer und liegt konstant bei 0,01 ms.

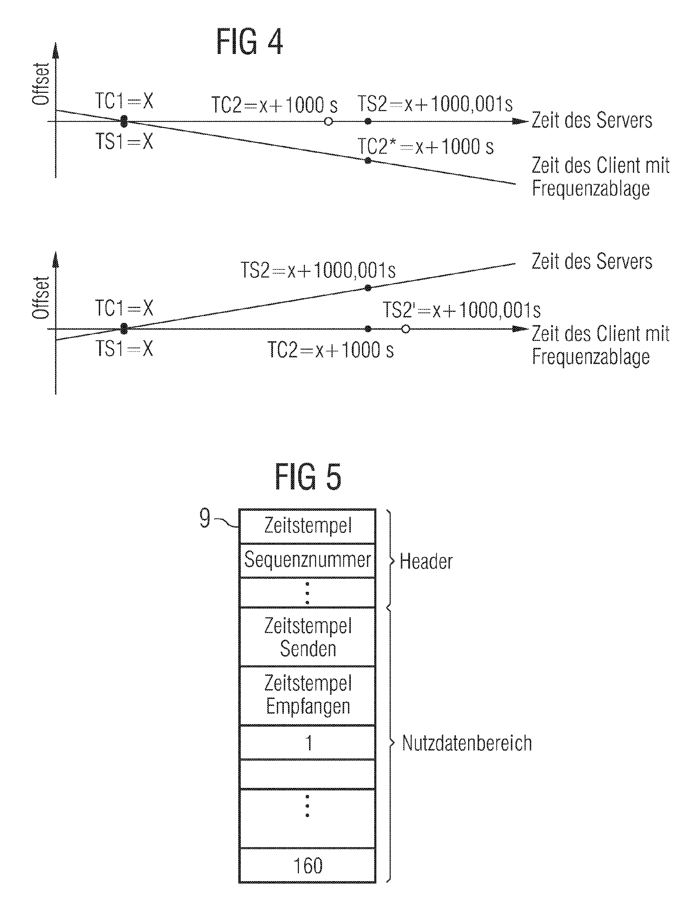

In Figur 4 sind zwei Diagramme zur Erläuterung einer Frequenzablage, einer innerhalb der Sende- und Empfangseinrichtung 5, 5' angeordneten Zeitmeßeinrichtung, dargestellt.

Werden zwei Takte miteinander verglichen, so werden sie entweder von der Sendeeinrichtung oder der Empfangseinrichtung aus gemessen. In dem in der Figur dargestellten Beispiel mißt die Empfangseinrichtung nach 1000 s die Zeit der Sendeeinrichtung: TS2 = x + 1000,001 s. Somit kann das Signal von der Sendeeinrichtung maximal 1 ms benötigt haben oder die Zeitmeßeinrichtung innerhalb der Sendeeinrichtung ist um maximal 1 ppm schneller als die innerhalb der Empfangseinrichtung angeordnete Meßeinrichtung.

Werden hingegen die Zeiten von der Sendeeinrichtung aus betrachtet, so wird die Zeit von der Empfangseinrichtung mit TC2 = x + 1000 s beobachtet. Da das Signal von der Empfangseinrichtung zu der Sendeeinrichtung eine endliche Zeit benötigt (eine negative Zeitverzögerung kann physikalisch ausgeschlossen werden), kann es sich also nur um eine Frequenzablage der innerhalb der Empfangseinrichtung angeordneten Zeitmeßeinrichtung handeln, die in diesem Beispiel mindestens 1 ppm langsamer ist als die Zeitmeßeinrichtung der Sendeeinrichtung.

Um die Zeitmeßeinrichtung der Empfangseinrichtung schnell und sicher nachzustellen, werden sowohl in der Empfangs- als auch in der Sendeeinrichtung geeignet ausgebildete Meßeinrichtungen vorgesehen. Die innerhalb der Sendeeinrichtung errechneten Einstelldaten (Nachführdaten) werden dann als Kennzeichnung an die Empfangseinrichtung gesendet, und eine innerhalb dieser Einrichtung angeordnete Nachführeinrichtung führt die Systemzeit der Zeitmesseinrichtung entsprechend der Kennzeichnung nach.

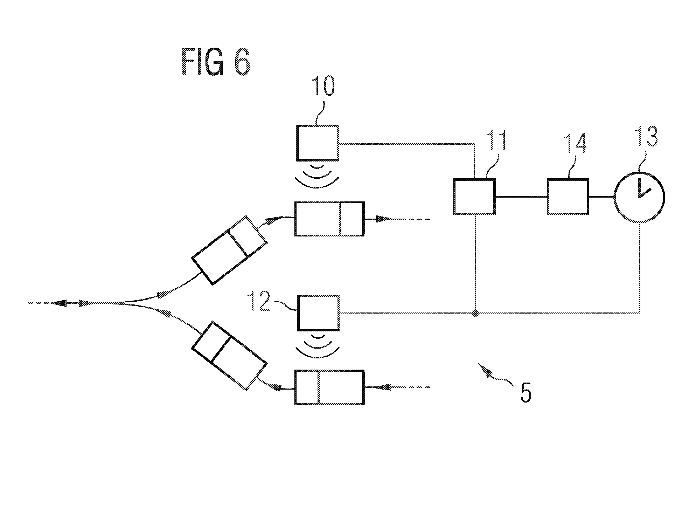

In Figur 5 ist ein innerhalb eines IP-Datenpaketes eingekapseltes erweitertes RTP-Datenpaket 9 dargestellt. RTP stellt Dienste zur Verfügung, um Echtzeitdaten zwischen Endpunkten einer Unicast- oder Multicast-Umgebung zu übertragen. Zu diesen Diensten gehören eine Kennzeichnung von übertragenen Nutzdaten und ihrer Quellen, eine Vergabe von Sequenznummern und Zeitstempeln an Datenpakete, eine Kontrolle einer zur Verfügung stehenden Dienstqualität QoS (Quality of Service) sowie eine Übertragung von Informationen über Teilnehmer.

Ein RTP-Datenpaket besteht aus einem 12 Byte großen Header, gefolgt von einem Nutzdatenbereich, der mit Nutzdaten (Audio, Video, Daten) gefüllt wird. In dem Header ist ein Byte speziell für eine Nutzlasttyp-Identifikation vorgesehen. Eine Sequenznummer wird für jedes gesendete RTP-Datenpaket um einen festen Wert inkrementiert, so daß die Empfangseinrichtung mit Hilfe dieser Nummer die ursprüngliche Reihenfolgebezeichnung (und sogar eventuelle Paketverluste) erkennen kann. Ein ebenfalls in dem Header enthaltener Zeitstempel dient einer Synchronisierung innerhalb eines Datenstroms. Dieser Zeitstempel beschreibt also einen Sendezeitpunkt des Datenpaketes. Mehrere aufeinanderfolgende RTP-Datenpakete weisen den gleichen Zeitstempel auf, wenn sie zeitlich zusammengehören.

In einer bevorzugten Ausführung des erfinderischen Verfahrens wird das in der Figur 5 dargestellte erweiterte RTP-Datenpaket 9 verwendet. Es werden zusätzlich im Nutzdatenbereich des Datenpaketes ein von der Empfangsstation empfangener Zeitstempel, ein beim Empfang festgehaltener Zeitstempel und ein beim Senden erzeugter Zeitstempel hinzugefügt. Die absolute Genauigkeit der Zeitstempel sollte dabei genauer 125 Mikrosekunden sein.

In Figur 6 ist eine Sende- und Empfangseinrichtung 5 zur Durchführung des Verfahrens dargestellt. Eine Empfangsprotokoll-Einrichtung 10 liest einen innerhalb eines redundanten Bereiches des erweiterten RTP-Datenpaketes 9 enthaltenen Zeitstempel, der beim Senden dieses Datenpaketes erzeugt wurde, aus und sendet eine Kennzeichnung in Abhängigkeit dieses Zeitstempels an eine Meßeinrichtung 11. Eine Sendeprotokoll-Einrichtung 12 fügt in dem redundanten Bereich eines zu übertragenden RTP-Datenpaketes 9 einen Sendezeitstempel ein. Dieser Stempel enthält eine von einer Zeitmeßeinrichtung 13 in Abhängigkeit der Systemzeit erzeugte Kennzeichnung der Sendezeit. Diese Kennzeichnung wird ebenfalls der Meßeinrichtung 11 zugeführt. Somit werden in dem redundanten Datenbereich des RTP-Datenpaketes 9 ein von einer Gegenstation empfangener Zeitstempel, der beim Empfang festgehaltene Zeitstempel und der beim Senden erzeugte Zeitstempel hinzugefügt. Die absolute Genauigkeit der Zeitstempel sollte genauer 125 Mikrosekunden betragen. Innerhalb der Meßeinrichtung 11 wird in Abhängigkeit der Zeitstempel eine eventuelle Frequenzablage der Zeitmeßeinrichtung 13 gemessen, entsprechend gekennzeichnet und diese Kennzeichnung einer Nachführeinheit 14 zugeführt. Diese Nachführeinheit 14 führt dann, in Abhängigkeit der Kennzeichnung der Frequenzablage, die Systemzeit der Zeitmeßeinrichtung 13 nach.

Die Ausführung der Erfindung ist nicht auf das beschriebene Beispiel und die oben hervorgehobenen Aspekte beschränkt, sondern im Rahmen der Ansprüche ebenfalls in einer Vielzahl von Abwandlungen möglich, die im Rahmen fachgemäßen Handelns liegen.

## Patentansprüche

1. Verfahren zur Synchronisierung eines Kommunikationssystems über ein paketorientiertes Datennetz (4) mittels einer Meßeinrichtung (11) zum Ermitteln einer Frequenzversetzung einer Zeitmeßeinrichtung (13),
   **dadurch gekennzeichnet, dass**
   zur Ermittlung der Frequenzversetzung innerhalb der Meßeinrichtung (11) nur Datenpakete (9) mit einer näherungsweise gleichen Hin- und Rücklaufzeit herangezogen werden.

2. Verfahren nach Anspruch 1,
   **dadurch gekennzeichnet, dass**
   zur Ermittlung der Frequenzversetzung nur Datenpakete (9) mit einer verhältnismäßig kurzen Laufzeit, insbesondere weniger als 5 ms, herangezogen werden.

3. Verfahren nach Anspruch 1 oder 2,
   **dadurch gekennzeichnet, dass**
   die Datenpakete (9) mittels Sendeeinrichtungen (5, 5') über nächstgelegene Referenzgeber (8) im Netzwerk, insbesondere über NBCS-Referenztaktgeber, transportiert werden.

4. Verfahren nach einem der vorhergehenden Ansprüche,
   **dadurch gekennzeichnet, dass**
   zum Transport der Datenpakete (9) auf ein erweitertes "Real-Time-Transport-Protokoll" zurückgegriffen wird.

5. Verfahren nach einem der vorhergehenden Ansprüche,
   **dadurch gekennzeichnet, dass**
   den Datenpaketen (9) mittels einer innerhalb einer Empfangseinrichtung (5, 5') angeordneten Empfangsprotokoll-Einrichtung (10) jeweils ein Zeitstempel zur Kennzeichnung einer Empfangszeit hinzugefügt werden.

6. Verfahren nach einem der vorhergehenden Ansprüche,

**dadurch gekennzeichnet, dass**
den Datenpaketen (9) mittels einer innerhalb einer Sendeeinrichtung (5, 5') angeordneten Sendeprotokoll-Einrichtung (12) ein Zeitstempel zur Kennzeichnung einer Sendezeit hinzugefügt wird.

7. Sende- und Empfangseinrichtung (5, 5') zur Durchführung des Verfahrens nach einem der vorhergehenden Ansprüche,
   **gekennzeichnet durch**

   - eine Sendeprotokoll-Einrichtung (12) zur Kennzeichnung einer Sendezeit und eine Empfangsprotokoll-Einrichtung (10) zur Kennzeichnung einer Empfangszeit eines Datenpaketes (9), mittels einer Hinzufügung eines jeweiligen Zeitstempels in einen Datenbereich des Datenpaketes (9);
   - eine Meßeinrichtung (11) zur Bestimmung einer Frequenzversetzung einer innerhalb der Sende- und Empfangseinrichtung angeordneten Zeitmeßeinrichtung (13) und eine Nachführeinheit (14) zum Nachführen der Zeitmeßeinrichtung (13) in Abhängigkeit der Frequenzversetzung.

8. Netzwerkeinrichtung zur Durchführung des Verfahrens nach einem der vorhergehenden Ansprüche,
   **gekennzeichnet durch**
   mindestens eine innerhalb des Netzwerkes angeordnete Transporteinrichtungen zum Weiterleiten der Datenpakete auf nächstgelegene Referenztaktgeber (8), insbesondere NBCS-Referenztaktgeber.

9. Netzwerkeinrichtung nach Anspruch 8,
   **dadurch gekennzeichnet, dass**
   das paketorientierte Datennetz (4) ein IP basiertes Netzwerk ist.

# FIG 1

# FIG 2

# FIG 3a

Ausführung A

8 — NBCS

7 — Switch

Switch

Switch

NBCS

Ausführung B

NBCS — 8

Switch — 7

NBCS

Switch

NBCS

# FIG 3b

Ausführung C

NBCS / Switch

NBCS / Switch

NBCS / Switch

# FIG 3c

Häufigkeit

Lösung C

Lösung B

Lösung A

0,01   0,1   1   10   100   Laufzeit [ms]

## FIG 4

Offset

TC1=X    TC2=x+1000 s    TS2=x+1000,001s    Zeit des Servers

TS1=X    TC2*=x+1000 s    Zeit des Client mit Frequenzablage

Offset

TS2=x+1000,001s    Zeit des Servers

TC1=X    TS2'=x+1000,001s

TS1=X    TC2=x+1000 s    Zeit des Client mit Frequenzablage

## FIG 5

9

| Zeitstempel | Header |
| Sequenznummer | |
| ⋮ | |
| Zeitstempel Senden | Nutzdatenbereich |
| Zeitstempel Empfangen | |
| 1 | |
| | |
| ⋮ | |
| 160 | |

FIG 6